(19) Europäisches Patentamt / European Patent Office / Office européen des brevets

(11) **EP 2 571 257 B1**

(12) **EUROPEAN PATENT SPECIFICATION**

(45) Date of publication and mention
of the grant of the patent:
**21.10.2015  Bulletin 2015/43**

(51) Int Cl.:
*G06F 3/0488* *(2013.01)*    *G06F 3/042* *(2006.01)*
*H04N 9/31* *(2006.01)*

(21) Application number: **12182087.2**

(22) Date of filing: **28.08.2012**

(54) **Projector device and operation detecting method**

Projektvorrichtung und Betriebserkennungsverfahren

Dispositif projecteur et procédé de détection d'opération

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.09.2011  JP 2011200832**

(43) Date of publication of application:
**20.03.2013  Bulletin 2013/12**

(73) Proprietor: **Ricoh Company, Ltd.
Tokyo 143-8555 (JP)**

(72) Inventor: **Ouchida, Shigeru
Ohta-ku, Tokyo 143-8555 (JP)**

(74) Representative: **Maury, Richard Philip
Marks & Clerk LLP
90 Long Acre
London WC2E 9RA (GB)**

(56) References cited:
**EP-A1- 1 689 172      JP-A- 2008 090 807
US-A1- 2009 168 027**

## EP 2 571 257 B1

**Description**

FIELD OF THE INVENTION

The present invention relates to a projector device and an operation detecting method.

BACKGROUND OF THE INVENTION

Conventionally, a projector device for projecting projection images on a screen is known. Since a projector device can display images of a big screen even though the device itself is small, the projector device is widely used as a tool for displaying documents for many audiences to view them easily in meetings and lectures, for example. In recent years, a projector device is demanded to have a function to allow for writing pictures, characters and the like in projection images, and a function to allow for easy operation of enlargement/reduction of projection images and of advancing pages. Thus, the technological development for realizing such functions is under way.

For example, Japanese Patent No. 3950837 discloses a technique of allowing for writing pictures and characters in a projection image of a projector device. With the technique described in Japanese Patent No. 3950837, a projection image projected on a white board is captured by a camera; a position, on the white board, of an electronic pen provided with an infrared-light-emitting unit and an ultrasonic wave generating unit is calculated by a signal processor provided with an infrared-light-receiving unit and an ultrasonic receiving unit; and the position of the electronic pen on the white board is normalized by the position of the projection image on the white board calculated from the image captured by the camera, thereby enabling to precisely obtain the position of the electronic pen on the projection image.

However, with the technique described in Japanese Patent No. 3950837, an electronic pen provided with an infrared-light-emitting unit and an ultrasonic generating unit has to be used to write pictures and characters in a projection image of a projector device. In addition, a signal processor provided with an infrared-light-receiving unit and an ultrasonic receiving unit has to be previously mounted on a projection surface on which a projection image is projected. As described above, with the technique described in Japanese Patent No. 3950837, the function to allow for writing pictures and characters in projection images of a projector device is realized only when a dedicated input device is used in a previously prepared environment. Therefore, the technique has disadvantages of lack of versatility and high device cost.

Furthermore, US 2009/0168027 A1 disclose a projector which determines a user as an input unit based on a stereoscopic image.

Therefore, there is a need for a projector device and an operation detecting method capable of realizing various functions by detecting an operation to a projection image without using a dedicated input device.

SUMMARY OF THE INVENTION

It is an object of the present invention to at least partially solve the problems in the conventional technology.

According to an embodiment, there is provided a projector device that includes a projection unit configured to project a projection image on a projection surface; an image capturing unit configured to capture an image of an imaging region including the projection surface by a plurality of imaging elements; a distance acquiring unit configured to acquire distance information indicating a distance between the image capturing unit and an object present in the imaging region based on a plurality of images output from the plurality of imaging elements; an input unit detecting unit configured to detect, based on the distance information, the object as an input unit performing an input operation with respect to the projection image when the object is present in a region of a predetermined distance from the projection surface; and an analyzing unit configured to analyze the input operation with respect to the projection image based on at least one of a position and a movement of the input unit on the projection image.

According to another embodiment, there is provided an operation detecting method executed in a projector device that includes a projection unit configured to project a projection image on a projection surface and an image capturing unit configured to capture an image of an imaging region including the projection surface by a plurality of imaging elements. The method includes acquiring distance information indicating a distance between the image capturing unit and an object present in the imaging region based on a plurality of images output from the plurality of imaging elements; detecting, based on the distance information, the object as an input unit performing an input operation with respect to the projection image when the object is present in a region of a predetermined distance from the projection surface; and analyzing the input operation with respect to the projection image based on at least one of a position and a movement of the input unit on the projection image.

The above and other objects, features, advantages and technical and industrial significance of this invention will be better understood by reading the following detailed description of presently preferred embodiments of the invention, when considered in connection with the accompanying drawings.

BRIEF DESCRIPTION OF THE DRAWINGS

FIG. 1 is a front view of a projector device according to an embodiment;
FIG. 2 is a block diagram illustrating an internal configuration of the projector device according to the embodiment;
FIG. 3 is a diagram illustrating a relationship between a size of a projection image projected on a screen and a size of an imaging region of a stereo camera;
FIGS. 4A and 4B are diagrams for explaining an example of a configuration of the stereo camera;
FIG. 5 is a functional block diagram illustrating functional components of a control device;
FIG. 6 is a diagram for explaining the principle of distance measurement using the stereo camera;
FIG. 7 is a diagram for explaining an example of detecting an operation of writing characters or pictures in a projection image;
FIG. 8 is a diagram for explaining an example of detecting an operation of a button included in a projection image;
FIG. 9 is a diagram for explaining an example of detecting a page progression operation of a projection image;
FIG. 10 is a diagram for explaining an example of detecting an enlargement/reduction operation of a projection image;
FIG. 11 is a flowchart illustrating sequential processes by the control device;
FIG. 12 is a diagram schematically illustrating a conventional trapezoidal correction process;
FIG. 13 shows distance measurement results of the respective focus points of the stereo camera in shades corresponding to the distances; and
FIG. 14 is a schematic diagram illustrating an aspect of integrally cutting out two of multiple imaging elements formed on a semiconductor wafer.

DETAILED DESCRIPTION OF THE PREFERRED EMBODIMENTS

Hereinafter, an embodiment of a projector device and an operation detecting method according to the present invention will be described in detail with reference to the accompanying drawings.

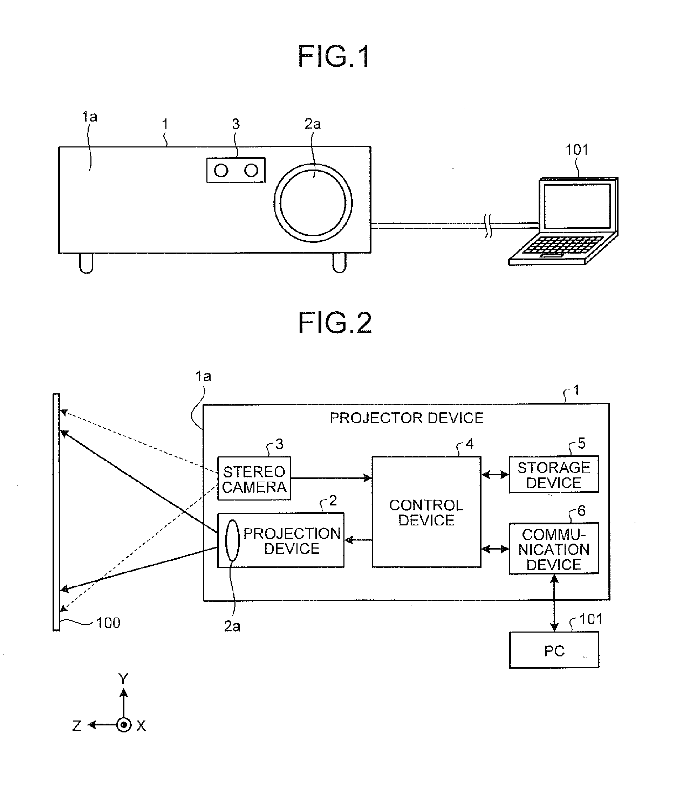

FIG. 1 is a front view of a projector device 1 according to the embodiment; and FIG. 2 is a block diagram illustrating an internal configuration of the projector device 1 according to the embodiment.

The projector device 1 according to the embodiment is placed in such a manner that a front (front surface) 1a thereof faces a screen (projection surface) 100. Here, the screen 100 is optional and various things such as a wall of a room and a white board, for example, may be used as the screen 100. In addition, the projector device 1 is connected to an external information processing device such as a personal computer (to be indicated as a PC 101 hereinafter) so as to be bi-directionally communicatable via a dedicated cable or a general-use cable such as a universal serial bus (USB) cable, for example. The projector device 1 may be connected to the PC 101 so as to be bi-directionally communicatable via radio communications complying with a known radio communication protocol.

On the front 1a side of the projector device 1, a projection lens 2a of a projection device 2 and a stereo camera 3 are arranged as illustrated in FIG. 1. Inside the projector device 1, a control device 4, a storage device 5 and a communication device 6 are provided in addition to the projection device 2 and the stereo camera 3 as shown in FIG. 2.

The projection device 2 projects a projection image on the screen 100 using the projection lens 2a under control of the control device 4. A projection image to be projected on the screen 100 by the projection device 2 is an image sent to the projector device 1 from the PC 101, for example. That means an image being displayed on the display unit of the PC 101 is projected on the screen 100 as a projection image by the projection device 2. For descriptive purpose, a direction along the horizontal direction of the a screen 100 (the width direction of the projector device 1) is indicated as X direction, a direction along the vertical direction of the screen 100 (the height direction of the projector device 1) is indicated as Y direction, and a direction along the direction in which the screen 100 and the projector device 1 face each other (the depth direction of the projector device 1) is indicated as Z direction hereinafter.

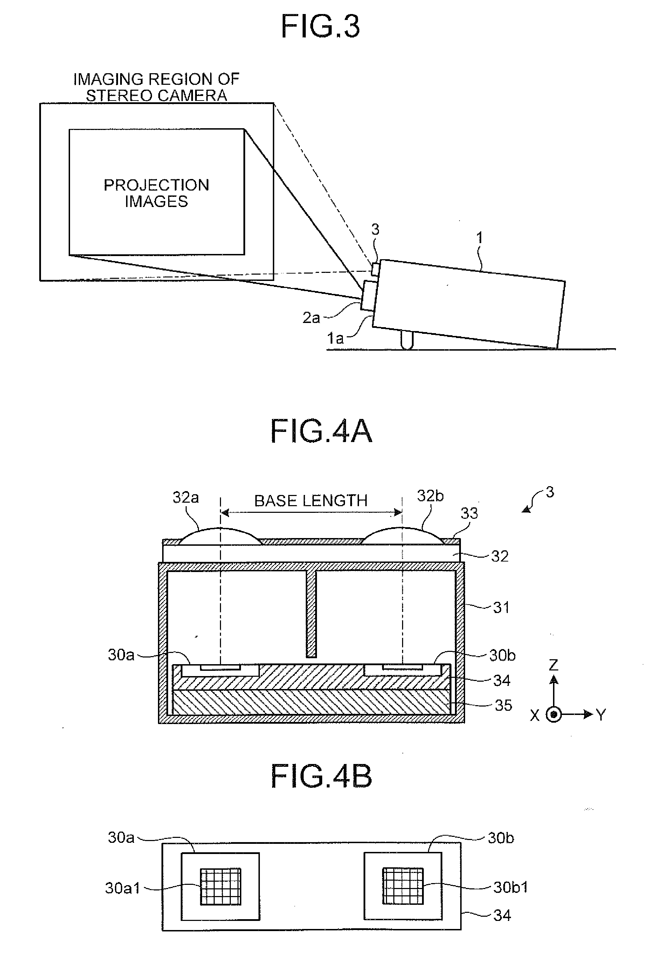

The stereo camera 3 is provided with a plurality of imaging elements and captures of an image of a predetermined imaging region using the plurality of imaging elements. The imaging region of the stereo camera 3 is a predetermined region in front of the front 1a of the projector device 1 including at least a projection image projected on the screen 100. FIG. 3 is a diagram illustrating a relationship between a size of a projection image projected on the screen 100 and a size of the imaging region of the stereo camera 3. For the stereo camera 3, angles of view of lenses forming optical images on the imaging elements, and the like are designed so that a larger region than the size of the projection image projected on the screen 100 can be captured, considering the assumed size of the projection image (the size of the screen 100) and the standard distance from the screen 100 to a position where the projector device 1 is placed.

Here, a specific example of a configuration of the stereo camera 3 will be described. FIGS. 4A and 4B are diagrams for explaining an example of a configuration of the stereo camera 3: FIG. 4A is a schematic sectional view of the stereo camera 3; and FIG. 4B is a plan view of an imaging element substrate 34 formed with a plurality of imaging elements (two imaging elements 30a and 30b in this example). The stereo camera 3 is provided with a housing 31, a lens array 32, an aperture array 33, the imaging element substrate 34, and a circuit substrate 35 as illustrated in FIG. 4A.

The housing 31 houses the imaging element substrate 34 and the circuit substrate 35 inside thereof. In addition, the housing 31 fixedly supports the lens array 32 and the aperture array 33 on the front surface side thereof (upper side in FIG. 4A). The lens array 32 and the aperture array 33 are supported by the housing 31 in a state where their positions are fixed with respect to the imaging element substrate 34. The housing 31 of the stereo camera 3 is provided inside the projector device 1 in such a manner that the front surface side thereof faces the front 1a of the projector device 1.

The lens array 32 is integrally formed with a pair of lenses 32a and 32b arranged along Y direction. The lens array 32 is manufactured by molding a transparent resin material, for example. The lens 32a is an optical component for forming an image of the imaging region on the imaging element 30a. The lens 32b is an optical component for forming an image of the imaging region on the imaging element 30b.

The aperture array 33 has two apertures positioned on the lens array 32 in such a manner that the lens 32a is exposed from one of the apertures, and the lens 32b is exposed from the other aperture. The aperture array 33 prevents lights from entering inside the housing 31 through a portion except for the lenses 32a and 32b by reflecting lights by a portion except for the two aperture lenses 32a and 32b.

The imaging element substrate 34 is integrally formed with two imaging elements 30a and 30b at a predetermined interval. The imaging element 30a faces the lens 32a of the lens array 32 and the imaging element 30b faces the lens 32b of the lens array 32. The lens array 32 is positioned so as to align the lens 32a with the center of the imaging element 30a, and to align the lens 32b with the center of the imaging element 30b. A distance between the center of the imaging element 30a and the center of the imaging element 30b that is a distance between optical axes of the lenses 32a and the lens 32b of the lens array 32 is called a base line length. In this embodiment, the base line length is assumed to be about 5 to 30 mm.

The imaging elements 30a and 30b are two-dimensional image sensors such as a CCD and a CMOS integrally formed on a semiconductor wafer as illustrated in FIG. 4B by a well-known semiconductor process, for example. On each imaging region (light-receiving surfaces) 30a1 and 30b1 of the imaging elements 30a and 30b, multiple light-receiving elements (pixels) are arranged in a lattice pattern.

The lenses 32a and the lens 32b of the lens array 32 have optical axes parallel to each other and have the same angles of view. In addition, these lenses 32a and 32b have focal lengths that make lights entering the respective lenses from an object to be imaged form images on the corresponding imaging regions 30a1 and 30b1 of the imaging elements 30a and 30b.

On the circuit substrate 35, a signal processing circuit for processing output signals from the imaging elements 30a and 30b is formed. The circuit substrate 35 is positioned on the rear face (a face opposite to the face on which the imaging elements 30a and 30b are formed) of the imaging element substrate 34, for example. In this embodiment, an analog front end (AFE) circuit for performing a noise reduction process, amplification, AD conversion and the like on analog signals output from the imaging elements 30a and 30b is mounted on the circuit substrate 35 of the stereo camera 3. In addition, a temperature sensor and a temperature compensation circuit are provided on the circuit substrate 35 in this embodiment. The temperature compensation circuit compensates for output errors of the imaging elements 30a and 30b due to temperature change using detected values by the temperature sensor. With this compensation process of the temperature compensation circuit, correct outputs can be obtained even when the distance (the base line length) between the lenses 32a and 32b is changed because of expansion or contraction of the lens array 32 due to temperature change.

The control device 4 collectively controls an operation of the projector device 1 by performing various computing operations with the use of the storage device 5. This control device 4 may be configured as a control integrated circuit (IC) provided with a CPU for running a control program, a digital signal processor (DSP) for processing image signals (digital data) in the imaging region output from the stereo camera 3, an input/output interface circuit, and the like.

The storage device 5 is a storage device used by the control device 4 for various calculations, and includes a frame memory for temporarily storing an image, a RAM used as a work area of the CPU, a ROM for storing a control program and various data for control, and the like.

The communication device 6 performs various controls for the projector device 1 to communicate with the PC 101.

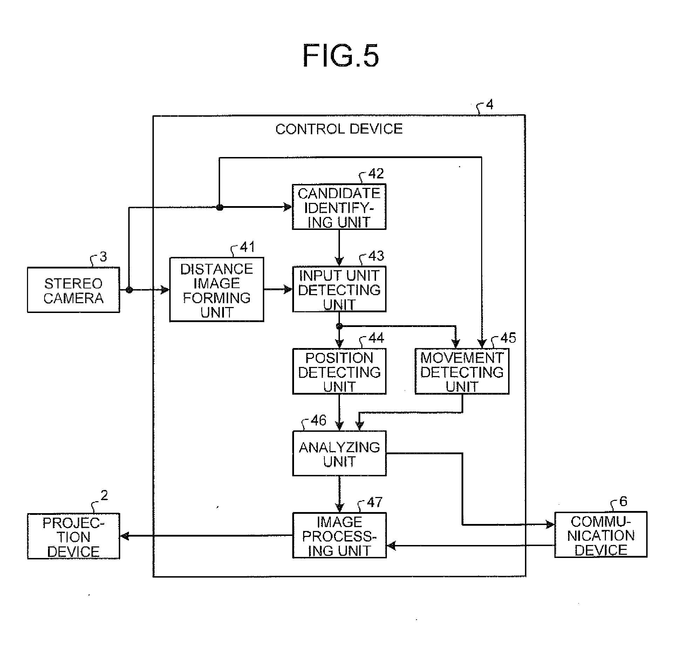

FIG. 5 is a functional block diagram illustrating functional components of the control device 4 that is characteristic in the projector device 1 in this embodiment. These respective functional components illustrated in FIG. 5 may be realized by the CPU of the control device 4 running a control program, for example. Alternatively, a part or all of these respective functional components may be constituted of a dedicated hardware such as an application specific integrated circuit (ASIC) and a field-programmable gate array (FPGA), for example.

The control device 4 detects an input operation of an operator with respect to a projection image projected on the screen 100, and includes, as illustrated in FIG. 5, a distance image forming unit (distance information acquiring unit) 41; a candidate identifying unit 42; an input unit detecting unit 43; a position detecting unit 44; a movement detecting unit 45; an analyzing unit 46; and an image processing unit 47 as functional components for performing processes corresponding to the input operation. In addition to these functions, the control device 4 includes an autofocus function using an image of the stereo camera 3; and a trapezoidal correction function, which will be described later.

The distance image forming unit 41 forms a distance image of the imaging region of the stereo camera 3 based on two images output from the two imaging elements 30a and 30b of the stereo camera 3. A distance image is an image indicating a distance (distance information) from the position of the stereo camera 3 (i.e. the position where the projector device 1 is placed) as a start point to respective objects with respect to various objects that are present in the imaging region of the stereo camera 3. In this embodiment, an example of acquiring the distance information as a distance image is described, but the distance information is not limited thereto.

For example, the distance image forming unit 41 firstly determines a correspondence relationship of two images output from the two imaging elements 30a and 30b by a known method such as a window correlation method, for example. The window correlation method is a process of searching for a region which has a high correlation value with a window region set in one image, from the other image. As the correlation value, brightness information of an image may be used, for example.

The distance image forming unit 41 that has determined the correspondence relationship of the two images output from the two imaging elements 30a and 30b calculates distances to the respective objects (regions) that are present in the imaging region of the stereo camera 3 on the following principle, and forms a distance image. In this embodiment, distance information of objects present in the imaging region of the stereo camera 3 is acquired as a distance image, but information other than the distance image may be used as long as information that can obtain positions of objects in XY directions and distances from the projector device 1 (positions in Z direction) is acquired.

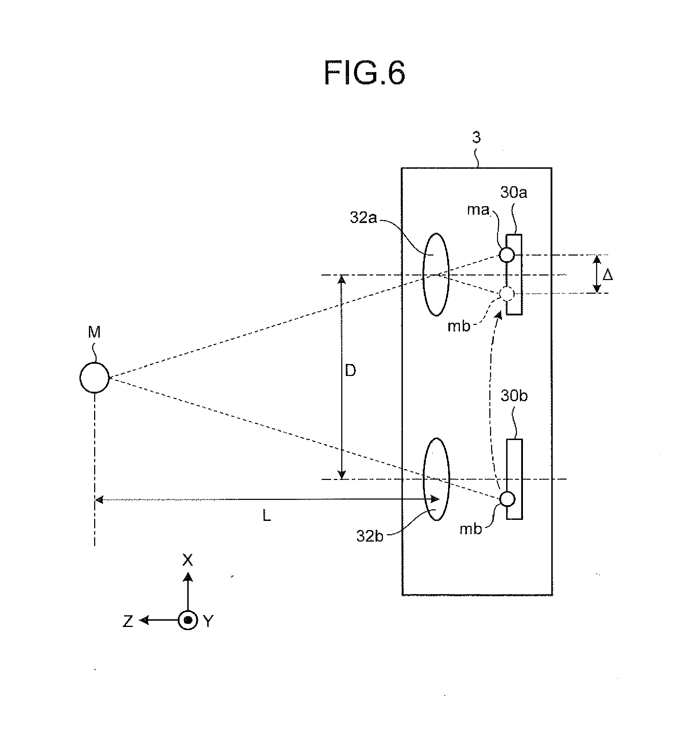

FIG. 6 is a diagram for explaining the principle of distance measurement using the stereo camera 3. When an object M is present in the imaging region of the stereo camera 3, an optical image of the object M (an image of an object to be imaged) is formed on the imaging element 30a through the lens 32a, and also formed on the imaging element 30b through the lens 32b. When an image of an object to be imaged formed on the imaging element 30a is indicated as ma, and an image of an object to be imaged formed on the imaging element 30b is indicated as mb, a pixel position of the image of the object to be imaged ma and a pixel position of the image of the object to be imaged mb on the imaging elements 30a and 30b are at a distance of disparity $\Delta$.

When the distance between the optical axes of the lenses 32a and 32b (base line length) is indicated as D, a distance between the lenses 32a and 32b and the object M is indicated as L, a focal distance of the lenses 32a and 32b is indicated as f, and it is assumed that the value L is larger enough than the value f, the following Equation (1) is satisfied.

$$L = D \times f/\Delta \qquad (1)$$

In Equation (1) above, the values D and f are known, and hence the distance L to the object M present in the imaging region of the stereo camera 3 can be calculated by detecting the disparity $\Delta$ from two images output from the two imaging elements 30a and 30b.

The distance image forming unit 41 forms a distance image indicating a distance to an object present in the imaging region of the stereo camera 3 by calculating the distance L for respective window regions corresponding to two images output from the two imaging elements 30a and 30b by the method described above, for example.

The candidate identifying unit 42 identifies an object(s) to be a candidate(s) of the input unit performing an input operation with respect to a projection image projected on the screen 100 among objects present in the imaging region of the stereo camera 3 by using an image output from at least one of the two imaging elements 30a and 30b of the stereo camera 3. In this embodiment, as the input unit performing an input operation with respect to a projection image, a finger of an operator that is in contact with the screen 100 or that is very close to the screen 100 is assumed, for example. In this case, information featuring a finger including a shape of a finger (elongated rod shape) and a color of a finger (flesh color) is stored in the storage device 5 as feature values.

The candidate identifying unit 42 analyzes an image output from at least one of the two imaging elements 30a and 30b of the stereo camera 3, and then detects an object having high correlation with feature values stored in the storage device 5 from this image by a method such as a known pattern matching, for example. Then, the candidate identifying unit 42 identifies the object(s) detected from the image by pattern matching or the like as a candidate(s) of the input unit. For example, when feature values of a finger are stored in the storage device 5, the candidate identifying unit 42 detects a finger of a person present in the imaging region of the stereo camera 3 as a candidate of the input unit. Here, the candidate identifying unit 42 can detect, as a candidate of the input unit, various objects other than a finger of an operator such as a pen and a pointer of general shapes by storing feature values thereof in the storage device 5.

The input unit detecting unit 43 detects, as the input unit performing an input operation with respect to a projection image, an object present in the area of the predetermined distance from the screen 100 toward the projector device 1 by using the distance image formed by the distance image forming unit 41. Specifically, the input unit detecting unit 43 firstly identifies the screen 100 from the distance image formed by the distance image forming unit 41, and calculates a distance (position in Z direction), to the screen 100. Next, the input unit detecting unit 43 searches for an object which has a difference from a distance to the screen 100 in a range of a predetermined distance, from a distance image. Then, if a shape of the object obtained as the search result is close to a predetermined shape of a finger of an operator, for example, the input unit detecting unit 43 detects the object as the input unit. Here, the predetermined distance is about 100 to 150 mm, for example.

In distance images used for detecting the input unit, an outline of an object or the like is not precise in many cases because it is difficult to precisely correlate images output from the two imaging elements 30a and 30b. In addition, since distance images do not have color information, it is difficult to correctly detect input units including a finger of an operator, for example, only from a distance image. Therefore, the input unit detecting unit 43 searches for objects present in the area of the predetermined distance from the screen 100 using a distance image. If appropriate objects are obtained from the distance image, the input unit detecting unit 43 detects, as the input unit, an object identified as a candidate of the input unit by the candidate identifying unit 42 among the objects obtained as the search result. Here, the objects obtained from the distance image and the object identifies as a candidate of the input unit by the candidate identifying unit 42 may be correlated using information of coordinate position on an XY plane of the image, for example. In addition, when the input unit can be accurately detected from the distance image, the input unit detecting unit 43 may be configured to detect the input unit only from the distance image. In this case, the candidate identifying unit 42 is unnecessary.

The position detecting unit 44 detects a position of the input unit detected by the input unit detecting unit 43 in X direction and Y direction. More specifically, when a finger of an operator is detected as the input unit, for example, the position detecting unit 44 detects a position of a fingertip on a projection image projected on the screen 100. The fingertip can be specified from a shape of a finger. In addition, a position of the fingertip on a projection image can be detected from a relationship between a position of the fingertip on the XY plane of an image and a position of the projection image.

The movement detecting unit 45 detects a movement of the input unit detected by the input unit detecting unit 43 using a plurality of images sequentially output from at least one of the two imaging elements 30a and 30b of the stereo camera 3. Foe example, when a finger of an operator is detected as the input unit, the movement detecting unit 45 detects a movement of the fingertip on a projection image projected on the screen 100. This process of the movement detecting unit 45 may be realized by applying a method of object tracking in a digital camera or the like, for example.

When the input unit detecting unit 43 detects a finger present near the screen 100 as the input unit, the movement detecting unit 45 detects a corresponding finger from an image output from the imaging element 30a or the imaging element 30b, sets the corresponding finger as a tracking target, and retains information including a shape and a color thereof (target information), for example. Next, the movement detecting unit 45 searches for a corresponding finger from images sequentially output from the imaging element 30a or the imaging element 30b thereafter using the retained target information. Then, the movement detecting unit 45 detects, as a movement of the finger as the input unit, a variation of a position of the finger on the XY plane between images sequentially output from the imaging element 30a or the imaging element 30b.

This process of the movement detecting unit 45 is finished at a time when the input unit detecting unit 43 does not detect the input unit that is a time when the finger of the operator present near the screen 100 moves away from the screen 100 so as to be out of the area of the predetermined distance as explained in the example described above. Then, when the input unit detecting unit 43 newly detects an input unit thereafter, the movement detecting unit 45 detects a movement of the new input unit. The process of the input unit detecting unit 43 and the process of the movement detecting unit 45 are performed in synchronization with a process period of 1/30 sec to 1/60 sec, for example.

The analyzing unit 46 analyzes an input operation by an operator with respect to a projection image projected on the screen 100 based on at least one of a position of the input unit detected by the position detecting unit 44 and a movement of the input unit detected by the movement detecting unit 45. Hereinafter, a specific example of an input operation by an operator with respect to a projection image will be exemplified, but various input operations as well as the input operation exemplified below may be analyzed.

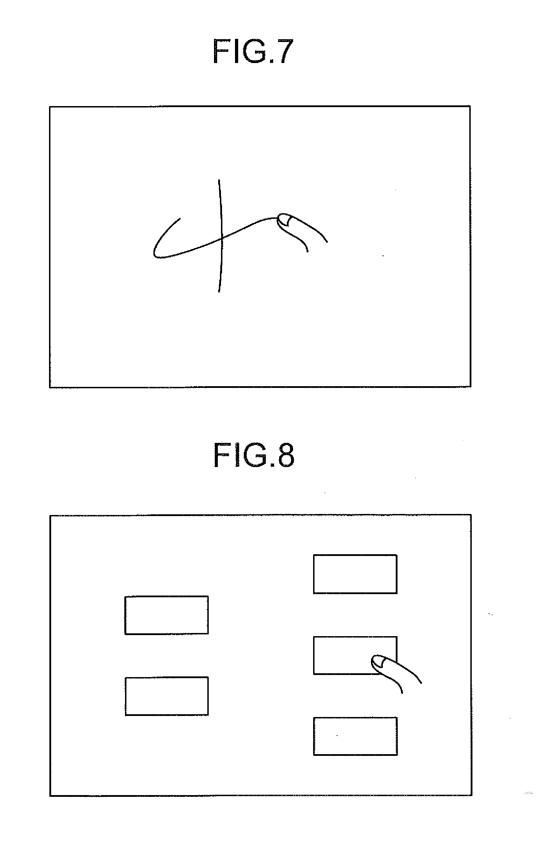

The analyzing unit 46 can detect an operation of writing characters or pictures in a projection image based on a movement of a finger of an operator detected as the input unit as illustrated in FIG. 7, for example. When the finger of the operator is out of the region of the predetermined distance from the screen 100, in other words, when the finger is away from the screen 100, the finger of the operator is not detected as the input unit. Thereafter, the finger of the operator approaches the screen 100 so as to enter the region of the predetermined distance, the finger of the operator is detected as the input unit and detection of a movement of the finger is started. Then, when the finger moves near the screen 100, the movement is detected, and when the finger moves away from the screen 100, detection of the movement is finished. Since the movement of the finger is detected only when the finger is present near the screen 100 as described above, a trajectory of the position of the fingertip thereof can be recognized as characters or pictures written in the projection image.

When the analyzing unit 46 detects an operation of writing characters or pictures in a projection image, shapes of written characters or pictures and information of a writing position (coordinate) are sent from the analyzing unit 46 to the image processing unit 47. The image processing unit 47 superimposes characters or pictures onto an image received by the communication device 6 from the PC 101 based on information from the analyzing unit 46. Then, an image onto which characters or pictures are superimposed by the image processing unit 47 is sent to the projection device 2. Thus, the projection image on which characters or pictures are written corresponding to the input operation of the operator is projected on the screen 100. Here, instead of the image processing unit 47 superimposing pictures or characters on an image from the PC 101, shapes of characters or pictures and information of a written position on the image may be sent from the communication device 6 to the PC 101 with an instruction to perform a writing process. In this case, an image on which characters or pictures are superimposed by the PC 101 side is sent to the projector device 1, and a projection image on which characters or pictures are written corresponding to the input operation by an operator is projected on the screen 100.

In addition, the analyzing unit 46 can detect an operation of a button included in a projection image based on a position, on a projection image, of a finger of an operator detected as the input unit as illustrated in FIG. 8, for example. Specifically, buttons for receiving an input from the operator are included in the projection image, and when the fingertip of the operator stays on a button position on the projection image for a predetermined time, it can be recognized that the operator has operated the button.

When the analyzing unit 46 detects operation of the button included in the projection image, an instruction corresponding to the button operation is sent to the PC 101 from the communication device 6. The PC 101 performs a process corresponding to the instruction sent from the projector device 1. Thus, a process corresponding to the button operation of the operator on the projection image can be performed.

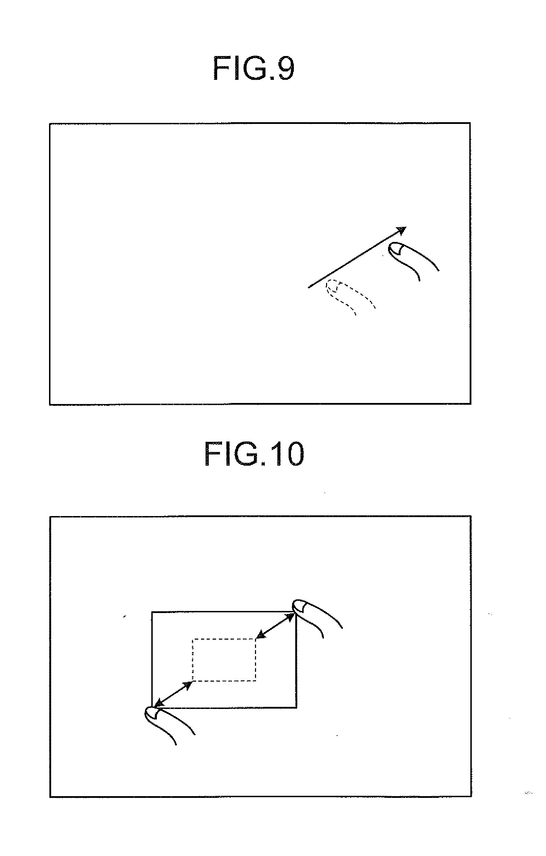

In addition, the analyzing unit 46 can detect a page progression operation of a projection image from a movement of a finger of an operator detected as the input unit as illustrated in FIG. 9, for example. Specifically, when the fingertip of the operator rapidly moves on the screen 100, and a distance and a direction of displacement are in predetermined ranges, it can be recognized that the operator made a page progression operation of a projection image.

When the analyzing unit 46 detects the page progression operation of a projection image, an instruction corresponding to the page progression operation is sent from the communication device 6 to the PC 101. The PC 101 performs a process of switching an image to be sent to the page projector device 1 to a next page or a previous page in accordance with the instruction sent from the projector device 1. This enables page switching of the projection image projected on the screen 100 in accordance with a page progression operation of the operator.

Further, the analyzing unit 46 can detect an enlargement/reduction operation of a projection image from a movement of two fingers of an operator detected as input units as illustrated in FIG. 10, for example. Specifically, when the two fingers of the operator moves away from each other, it can be recognized that the operator has made an enlargement operation of the projection image. When the two fingers of the operator move closer to each other, it can be recognized that the operator has made a reduction operation of the projection image.

When the analyzing unit 46 detects an operation of enlargement/reduction of a projection image, an instruction corresponding to the enlargement/reduction operation of a projection image is sent from the communication device 6 to the PC 101. The PC 101 performs a process of enlarging/reducing an image to be sent to the projector device 1 in accordance with the instruction sent from the projector device 1. This enables enlargement/reduction of the projection image projected on the screen 100 in accordance with an operation on the projection image by the operator.

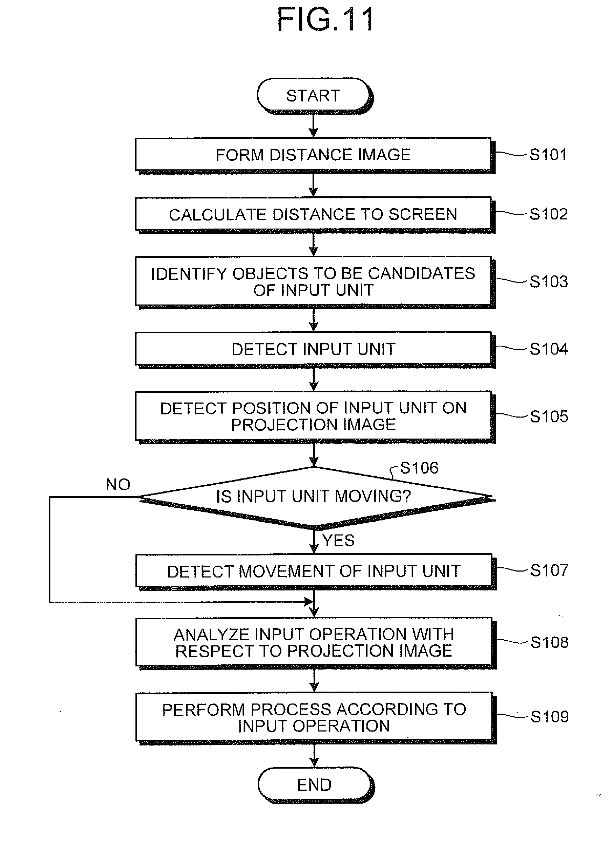

FIG. 11 is a flowchart illustrating a sequential processes from detection of an input operation with respect to a projection image by an operator through to performance of a process corresponding to the input operation by the respective functional components of the control device 4 described above. Hereinafter, a summary of the process of the control device 4 will be described following this flowchart.

First, in step S101, the distance image forming unit 41 forms a distance image of the imaging region of the stereo camera 3 based on two images output from the two imaging elements 30a and 30b of the stereo camera 3.

In step S102, the input unit detecting unit 43 calculates a distance from the projector device 1 to the screen 100, on which a projection image is projected, based on the distance image formed by the distance image forming unit 41 in step S101.

In step S103, the candidate identifying unit 42 identifies objects to be candidates of the input unit among objects present in the imaging region of the stereo camera 3 using an image output from one of the two imaging elements 30a and 30b of the stereo camera 3.

In step S104, the input unit detecting unit 43 identifies objects present in a region of a predetermined distance from the position of the screen 100 using the distance to the screen 100 calculated in step S102 as a reference, and among the identified objects, the input unit detecting unit 43 detects, as the input unit, the object identified as the candidate of the input unit by the candidate identifying unit 42 in step S103.

In step S105, the position detecting unit 44 detects a position of the input unit, which has been detected by the input unit detecting unit 43 in step S104, on the projection image.

In step S106, the movement detecting unit 45 determines if the input unit, which has been detected by the input unit detecting unit 43 in step S104, is moving on the projection image or not using a plurality of images sequentially output from one of the two imaging elements 30a and 30b of the stereo camera 3. And if the input unit is moving on the projection image (step S106: Yes), the movement detecting unit 45 detects a movement of the input unit by tracking the input unit through the plurality of images in step S107. On the other hand, if the input unit is not moving on the projection image (step S106: No), the process jumps to step S108 skipping the movement detection in step S107.

In step S108, the analyzing unit 46 analyzes an input operation of the operator with respect to the projection image projected on the screen 100 based on at least one of the position of the input unit detected by the position detecting unit 44 in step S105 and the movement of the input unit detected by the movement detecting unit 45 in step S107. In step S109, a process with respect to the projection image is performed according to a content of the input operation analyzed by the analyzing unit 46 in step S108.

As described above, the projector device 1 according to this embodiment detects an input operation of an operator with respect to a projection image using the stereo camera 3, and hence the input operation of the operator can be accurately detected. Specifically, with the use of the distance image of the stereo camera 3, a position in the depth direction (Z direction) that is a distance to an object can be detected as well as a position in an image plane (X and Y directions) as to objects present in the imaging region of the stereo camera 3. Therefore, among objects present in the imaging region of the stereo camera 3, only an object in a position close to the screen 100 on which a projection image is projected can be detected as the input unit that performs an input operation with respect to the projection image. Then, based on the position of the detected input unit on the projection image and the movement thereof in X and Y directions, an input operation of an operator with respect to the projection image can be accurately detected.

Conventionally, a projector device provided with not a stereo camera but a monocular camera is known. A monocular camera cannot detect a distance to an object present in an imaging region thereof (depth), and a three-dimensional coordinate position of the object cannot be calculated. Therefore, in a technique described in Japanese Patent No. 3950837, for example, a special pen that emits an infrared light and generates an ultrasonic wave when it touches a board (screen) is used as an input unit so that characters and pictures can be written on a projection image. However, the technique has disadvantages of no versatility and high device cost because a special pen has to be used in order to write characters and pictures on a projection image, and a signal processor for receiving an infrared light and for receiving an ultrasonic wave has to be provided on the board. On the contrary, the projector device 1 according to this embodiment can write characters and pictures on a projection image by a finger of an operator, for example, without using a special pen or the like. In addition, the projector device 1 according to this embodiment can appropriately detect various input operations, which are hard to be realized by an operation using such a special pen, including enlargement and reduction of a projection image, for example.

In addition, with a configuration of detecting a position and a movement of a finger of an operator or the like from an image captured by a monocular camera and analyzing an input operation with respect to a projection image, there is a possibility of a false detection of a finger or the like having a similar shape, if included as an image in the projection image, as an object to perform an input operation so as to perform a wrong process. On the contrary, with the use of the distance image of the stereo camera 3, a finger projected on the screen 100 as the projection image and a finger performing an input operation near the screen 100 can be clearly distinguished, and hence a false detection as described above can be prevented.

Here, the distance image of the stereo camera 3 has disadvantages of no color information, imprecise outline of an object in many cases, and the like. Therefore, it may be difficult to detect a finger of an operator only from the distance image depending on an individual difference of an operator performing an input operation with respect to the projection image or depending on a difference of a scene and conditions of an input operation. In such a case, the detection accuracy can be improved by analyzing an image output from one of the imaging elements 30a and 30b of the stereo camera 3 so as to detect fingers present in the imaging region, and by identifying a finger present near the screen 100 using the distance image as described above.

Meanwhile, many of projector devices are generally provided with an autofocus function for automatically focusing on the projection image upon startup, a trapezoidal correction function for correcting trapezoidal distortion of the projection image, and the like. In order to realize functions as described above, conventional projector devices are provided with various sensors. For example, it is known to measure a distance to a screen on which a projection image is projected by using an optical sensor described in Japanese Laid-open Patent Publication No. 2003-42733, for example, and to adjust the position of a projection lens based on the distance in order to provide an auto focus function to a projector device. In addition, it is known to provide a plurality of distance sensors on different positions on a front surface of a projector device as described in Japanese Laid-open Patent Publication No. 2000-122617 so that a control microcomputer calculates an inclination angle of the projector device with respect to a projection surface based on detection results of the distance sensors in order to provide a trapezoidal correction function to the projector device.

On the contrary, since the projector device 1 according to this embodiment is provided with the stereo camera 3, the autofocus function and the trapezoidal correction function can be realized using the stereo camera 3. That means the projector device 1 according to this embodiment can realize the auto focus function and the trapezoidal correction function by detecting a distance to the screen 100 and an inclination of the screen 100 with respect to the projector device 1 by using the distance image of the stereo camera 3. Thus there is no need of separately providing an optical sensor for realizing the auto focus function, a plurality of distance sensors for realizing the trapezoidal correction function, or the like. Hereinafter, specific examples of the autofocus function and the trapezoidal correction function realized by the projector device 1 according to this embodiment.

An autofocus operation of the projector device 1 is performed as one of initial setting operations upon startup of the projector device 1 under control of the control device 4, for example. When the projector device 1 is powered on, the control device 4 firstly activates the projection device 2, and supplies an image of an opening screen, which is previously stored in the storage device 5 or the like, to the projection device 2. Then, the projection device 2 projects the projection image of the opening image on the screen 100. The control device 4 also activates the stereo camera 3, and makes it start to image the imaging region including the projection image of the opening image projected on the screen 100. The opening image includes a corporate logo and the like, for example.

The imaging elements 30a and 30b of the stereo camera 3 respectively output image signals of the imaging region, and the signals are converted to digital data to be input to the control device 4. The control device 4 (distance image forming unit 41) forms a distance image using these images from the stereo camera 3, and from the distance image, the control device 4 detects a distance to the logo included in the opening image, for example, so as to detect a distance from the projector device 1 to the screen 100.

Then, the control device 4 sends a drive control signal to the projection device 2 based on the detected distance to the screen 100. The drive control signal is for moving the projection lens 2a of the projection device 2 in the optical axis direction. The projection device 2 moves the projection lens 2a to the focal position corresponding to the drive control signal from the control device 4. Thus, an in-focus projection image can be projected on the screen 100.

Generally, a projector device unfortunately projects a screen with distortion called trapezoidal distortion (also called keystone distortion) when a projection angle of a projection image deviates with respect to the screen 100. Therefore, conventionally, two distance sensors are arranged on a front surface of a projector device so as to calculate an inclination angle θ between the projector device and the screen 100 based on distances to the screen 100 measured by the two distance sensors. Then based on the calculated inclination angle, the trapezoidal distortion of a projected screen is conventionally corrected.

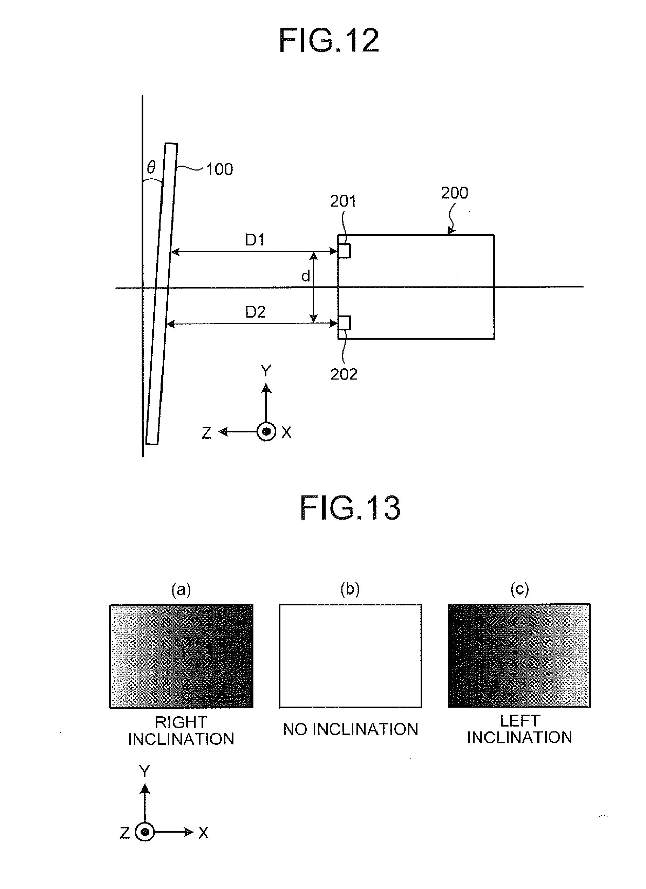

FIG. 12 is a diagram schematically illustrating a conventional trapezoidal correction process. As illustrated in FIG. 12, two distance sensors 201 and 202 are arranged at a distance d on the front surface side of a projector device 200. At this time, an inclination angle θ between the projector device 200 and the screen 100 is expressed as the following Equation (2) where distance output values from the two distance sensors 201 and 202 to the screen 100 are indicated as D1 and D2.

$$\tan \theta = (D1 - D2)/d \qquad\qquad (2)$$

Such a conventional manner has following disadvantages. That is, inclinations only around X axis can be measured from the distance output values D1 and D2 of the two distance sensors 201 and 202. In order to measure inclinations around Y axis, two more distance sensors have to be provided. In addition, an interval d of the two distance sensors 201 and 202 cannot be larger than the width of the projector device 200. Therefore, inclinations can be measured only in a narrow area no wider than the width of the projector device 200 in the bigger screen 100, and thus inclinations of the screen 100 as a whole cannot be detected.

In the projector device 1 according to the embodiment, the stereo camera 3 is used to detect an inclination of the screen 100 with respect to the projector device 1 as described above. With the use of the stereo camera 3, an imaging region can be a wide area by designing the lenses 32a and 32b of the stereo camera 3 to be wide, and hence distances in the wide area can be measured. For example, when a diagonal angle of view is set to 65 degrees, it is possible to measure distances in the whole area of the screen 100 of 100 inches that is 2 meters away from the projector device 1. Therefore, inclinations can be precisely detected in far wider area than a case where the inclination angle θ of the screen 100 is detected using the two distance sensors 201 and 202 arranged on the front surface of the projector device 200 as illustrated in FIG. 12.

In addition, since the imaging elements 30a and 30b of the stereo camera 3 are two-dimensional sensors, multiple focus points can be provided corresponding to the numbers of pixels of the imaging elements 30a and 30b. For example, when the imaging elements 30a and 30b of Video Graphics Array (VGA) size (640 x 480 pixels) are used and matching is performed by setting pixels of 8 x 6 as one unit, 80 x 80 focus points can be provided. FIG. 13 shows distance measurement results of the respective 80 x 80 focus points in shades corresponding to the distances. When the screen 100 does not incline at all, and thus all distances in the surface thereof are equal to each other, the density in the surface is uniform as illustrated in (b) of FIG. 13. On the other hand, when the screen 100 inclines to the left or right, the density is non-uniform corresponding to the inclination as illustrated in (a) or (c) of FIG. 13.

When the distance of each focus point in the surface of the screen 100 is known as described above, an inclination angle 0 of the screen 100 with respect to the projector device 1 can be calculated using the following Equation (3). In Equation (3), L1 is a distance from the projector device 1 to the center of a projection image projected on the screen 100, L2 is a distance from the projector device 1 to an edge of the projection image projected on the screen 100, and $\alpha$ is an angle of view of the lenses 32a and 32b of the stereo camera 3.

$$\tan \theta = (L2 - L1)/L2 \times \tan (\alpha/2) \qquad (3)$$

Although only the inclination in a horizontal plane of the screen 100 is described here, the inclination in a vertiacal plane of the screen 100 can be naturally detected in a similar way. In addition, since distances are measured at multiple focus points using the stereo camera 3, slightly uneven inclinations in the surface of the screen 100 can be detected when such slightly uneven inclinations exist in the surface. Here, only detection of inclinations is described, but the trapezoidal distortion of a projection image can be accurately corrected similarly to the conventional manner when inclinations can be precisely detected.

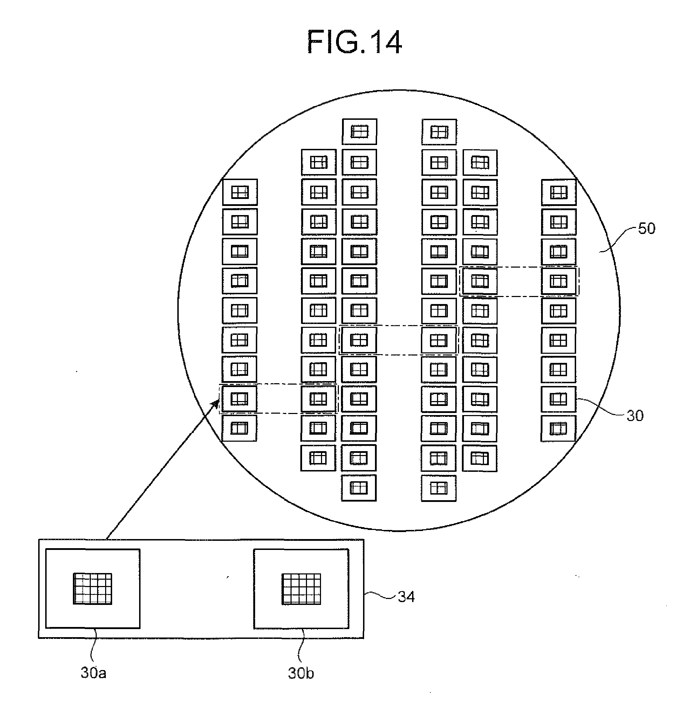

In the stereo camera 3 provided in the projector device 1 according to this embodiment, two imaging elements 30a and 30b are integrally formed on the imaging element substrate 34 as described above. Such two imaging elements 30a and 30b can be obtained by integrally cutting out two of multiple imaging elements 30 formed on a semiconductor wafer 50 by a well known semiconductor process along a dashed line border as illustrated in FIG. 14, for example.

The multiple imaging elements 30 on the semiconductor wafer 50 has been patterned using a mask, and hence the imaging elements 30a and 30b cut out from the multiple imaging elements 30 are aligned with high accuracy so that pixel matrixes of the imaging elements 30a and 30b are parallel to each other. In addition, since the surface of the semiconductor wafer 50 is an accurate plane, normals of the imaging elements 30a and 30b are also parallel to each other. Therefore, the imaging elements 30a and 30b can be accurately positioned without an operation of correcting a positional deviation and an angle deviation of the imaging elements 30a and 30b. By using the stereo camera 3 provided with the imaging elements 30a and 30b described above, distances to the screen 100 and to an object that is present in the imaging region on the near side of the screen 100 can be precisely detected.

In addition, the size of the imaging elements 30a and 30b provided in the stereo camera 3 may be much smaller comparing to the size (about 1/2.3 inch) of an imaging element used for a digital camera or the like. For example, a small imaging element of about 1/10 inch that is used for a camera module of a mobile phone can be used.

Generally, a small size imaging element cannot work well in dark places because a light amount entering in the element is small, which is a disadvantage thereof. However, the stereo camera 3 provided in the projector device 1 according to this embodiment ensures a sufficient light amount since it images the screen 100 on which a projection image is projected. Therefore, even when a small size imaging element is used, sufficient performance can be provided, and the use of a small size imaging element enables to downsize the stereo camera 3.

Further, an imaging element for a camera module of a mobile phone is advantageous in cost since it is mass-produced, and an imaging element of VGA size (640 x 480 pixels) is especially inexpensive. Therefore, when two of multiple imaging elements of VGA size, for example, formed on the semiconductor wafer 50 by a well known semiconductor process are integrally cut out, two imaging elements 30a and 30b integrally formed on the imaging element substrate 34 as illustrated in FIG. 4B can be obtained at low cost. Thus, the cost of the stereo camera 3 can be also reduced.

In this embodiment, the stereo camera 3 is described to have two imaging elements 30a and 30b, but the stereo camera 3 may be configured to have three or more imaging elements. In this case, three or more imaging elements in line that are of multiple imaging elements formed on the semiconductor wafer 50 may be integrally cut out, and the cut out imaging elements may be used as imaging elements of the stereo camera 3. With this configuration, a base line length D can be large when a distance between imaging elements at both ends of the three or more imaging elements in line is the base line length D. Therefore, the disparity $\Delta$ (= D x f/L) becomes large as can be understood from Equation (1) above, and hence distances can be measured with high accuracy.

In addition, in the stereo camera 3 provided in the projector device 1 according to this embodiment, the lenses 32a and 32b for forming optical images on the imaging elements 30a and 30b are integrally formed as the lens array 32 as described above. This is to prevent the two lenses 32a and 32b from moving separately in order to detect the disparity $\Delta$ with high accuracy. For example, when either one of the two lenses 32a and 32b deviates from its position, the other lens also deviates from its position by the same amount in the same direction if they are integrated, and hence the base line length D that is an interval between the two lenses 32a and 32b can be kept constant. When the base line length D and the lens focal distance f are kept constant, the disparity $\Delta$ can be kept constant as can be understood from Equation (1) above.

Since the stereo camera 3, which is provided in the projector device 1 according to this embodiment, is provided with the integrated imaging elements 30a and 30b and the integrated lenses 32a and 32b as described above, the two lenses 32a and 32b and the two imaging elements 30a and 30b always integrally move together even with vibration, temperature change, and temporal change. Therefore, the disparity $\Delta$ is stable with respect to vibration, temperature change, and temporal change. Thus, distances can be stably detected with high accuracy. A projector device is generally provided with a big light source generating heat in order to display a big screen brightly. A cooling fan for cooling the light source is also provided. Therefore, the projector device has heat and vibration, but the projector device 1 according to this embodiment can accurately detect distances since the stereo camera 3 provided with the integrated imaging elements 30a and 30b and the integrated lenses 32a and 32b is used in the projector device 1, and thus the projector device 1 is stable with respect to heat and vibration.

In the projector device 1 according to this embodiment, a characteristic functional configuration of the control device 4 described above (refer to FIG. 5) can be realized by the CPU of the control device 4 running a control program, as an example. In this case, the control program run by the CPU of the control device 4 may be previously embedded and provided in a ROM included in the storage device 5, for example.

The control program run by the CPU of the control device 4 may be configured as a file in a form that can be installed or run, and recorded and provided in a computer readable recording medium such as a CD-ROM, a flexible disk, a CD-R, a DVD, or the like. In addition, the control program run by the CPU of the control device 4 may be configured to be stored in a computer connected to a network such as the Internet and to be provided by downloading via the network. Further, the control program run by the CPU of the control device 4 may be configured to be provided or distributed via a network such as the Internet.

The control program run by the CPU of the control device 4 may have a module configuration including the distance image forming unit 41, the candidate identifying unit 42, the input unit detecting unit 43, the position detecting unit 44, the movement detecting unit 45, the analyzing unit 46, and the image processing unit 47, for example. The CPU (processor) as an actual hardware reads the control program from the ROM and runs the control program, whereby the respective units described above are loaded on a primary storage device (RAM, for example) so that the distance image forming unit 41, the candidate identifying unit 42, the input unit detecting unit 43, the position detecting unit 44, the movement detecting unit 45, the analyzing unit 46, and the image processing unit 47 are formed on the primary storage device.

Although a specific embodiment of the present invention is described above, the present invention is not limited to the embodiment described above as is but may be realized with changes of components when implemented without departing from the scope of the invention. For example, a distance image is formed by the control device 4 in the embodiment described above, but a distance image may be formed by the stereo camera 3 by providing a DSP or the like for processing digital signals on the stereo camera 3, and then the formed distance image may be sent to the control device 4. In addition, an input operation of an operator with respect to a projection image is detected by the projector device 1 in the embodiment described above, but a distance image of the stereo camera 3 may be sent to the PC 101, and then the PC 101 may detect an input operation of an operator with respect to a projection image.

According to the embodiments, distance information of an object that is present in an imaging region including a projection surface of a projection image is acquired; the object is recognized as an input unit performing an input operation to the projection image if the object is present in an area of a predetermined distant from a projection surface; and the input operation to the projection image is analyzed based on at least one of a position and a movement of the input unit, thereby having an effect that various functions can be realized by detecting an input to the projection image without using a dedicated input device.

Although the invention has been described with respect to specific embodiments for a complete and clear disclosure, the appended claims are not to be thus limited but are to be construed as embodying all modifications and alternative constructions that may fall within the scope of the appended claims.

**Claims**

1. A projector device (1) comprising:

   a projection unit (2) configured to project a projection image on a projection surface (100);
   a stereo camera configured to capture an image of an imaging region including the projection surface by two spaced imaging elements (30a, 30b);
   a distance acquiring unit (41) configured to acquire distance information indicating distances between the image capturing unit (3) and the projection surface and between the image capturing unit and an object imposed between the stereo camera and the projection surface and present in the imaging region, based on a correspondence relationship between two images output from the respective imaging elements (30a, 30b);
   an input unit detecting unit (43) configured to detect, based on the distance information, the object as an input unit performing an input operation with respect to the projection image when and only when the object is present only within a predetermined range of distance from the projection surface (100) so that it is near to or touching the projection surface; and

an analyzing unit (46) configured to analyze the input operation based on at least one of a position and a movement of the input unit on the projection image projected on the projection surface (100).

2. The projector device (1) according to claim 1, further comprising:

a storage device (5) configured to store therein a feature value of an object to be a candidate of the input unit; and a candidate identifying unit (42) configured to identify the object present in the imaging region as the object to be the candidate of the input unit based on the image output from at least one of the imaging elements (30a, 30b) and the feature value, wherein

the input unit detecting unit (43) is configured to detect, as the input unit, the object identified by the candidate identifying unit (42) and present within the predetermined range of distance from the projection surface (100).

3. The projector device (1) according to claim 1 or 2 further comprising a movement detecting unit configured to detect a movement of the input unit based on the images sequentially output from at least one of the imaging elements (30a, 30b), wherein

the analyzing unit (46) is configured to analyze the input operation based on the movement of the input unit detected by the movement detecting unit.

4. The projector device (1) according to any one of claims 1 to 3, wherein the stereo camera comprises two lenses (32a, 32b) configured to form images of the imaging region on the respective imaging elements (30a, 30b), the imaging elements (30a, 30b) being provided on one substrate (34) and formed so as to move integrally with the lenses (32a, 32b) which are positioned to face the respective imaging elements (30a, 30b).

5. An operation detecting method executed in a projector device that includes a projection unit (2) configured to project a projection image on a projection surface (100) and a stereo camera (3) configured to capture an image of an imaging region including the projection surface (100) by two spaced imaging elements (30a, 30b), the method comprising:

acquiring distance information indicating distances between the image capturing unit (3) and the projection surface and between the image capturing unit and an object imposed between the stereo camera and the projection surface and present in the imaging region, based on a correspondence relationship between two images output from the respective imaging elements (30a, 30b);

detecting, based on the distance information, the object as an input unit performing an input operation with respect to the projection image when and only when the object is present only within a predetermined range of distance from the projection surface (100) so that it is near to or touching the projection surface; and 5290135-1-RMAURY

analyzing the input operation based on at least one of a position and a movement of the input unit on the projection image projected on the projection surface (100).

## Patentansprüche

1. Projektorvorrichtung (1), umfassend:

eine Projektionseinheit (2), die dafür konfiguriert ist, ein Projektionsbild auf eine Projektionsoberfläche (100) zu projizieren;

eine Stereokamera, die dafür konfiguriert ist, ein Bild eines Abbildungsbereichs, der die Projektionsfläche einschließt, durch zwei abbildende Elemente (30a, 30b) aufzunehmen;

eine Entfernungserfassungseinheit (41), die dafür konfiguriert ist, Entfernungsinformation zu erfassen, die Entfernungen zwischen der Bildaufnahmeeinheit (3) und der Projektionsoberfläche und zwischen der Bildaufnahmeeinheit und einem Objekt angibt, das zwischen der Stereokamera und der Projektionsoberfläche eingeführt wird und im Abbildungsbereich vorliegt, und zwar auf der Grundlage einer Korrespondenzbeziehung zwischen zwei von den jeweiligen abbildenden Elementen (30a, 30b) ausgegebenen Bildern;

eine Eingabeeinheit-Ermittlungseinheit (43), die dafür konfiguriert ist, auf der Grundlage der Entfernungsinformation das Objekt als eine Eingabeeinheit zu ermitteln, die eine Eingabeoperation in Bezug auf das Projektionsbild durchfuhrt, wenn und nur wenn das Objekt nur innerhalb eines vorbestimmten Entfernungsbereichs von der Projektionsoberfläche (100) vorliegt, sodass es nahe der Projektionsoberfläche ist oder sie berührt; und eine Analyseeinheit (46), die dafür konfiguriert ist, die Eingabeoperation auf der Grundlage von mindestens einem von Folgendem zu analysieren: eine Position und eine Bewegung der Eingabeeinheit auf dem Projektionsbild, das auf die Projektionsoberfläche (100) projiziert wird.

2. Projektorvorrichtung (1) nach Anspruch 1, ferner umfassend:

eine Speichervorrichtung (5), die dafür konfiguriert ist, darin einen Merkmalswert eines Objekts zu speichern, das ein Kandidat für die Eingabeeinheit sein soll;
eine Kandidatenidentifizierungseinheit (42), die dafür konfiguriert ist, das im Abbildungsbereich vorliegende Objekt als das Objekt zu identifizieren, das der Kandidat für die Eingabeeinheit sein soll, und zwar auf der Grundlage des von mindestens einem der abbildenden Elemente (30a, 30b) ausgegebenen Bildes und des Merkmalswerts, worin
die Eingabeeinheit-Ermittlungseinheit (43) dafür konfiguriert ist, dasjenige Objekt als die Eingabeeinheit zu identifizieren, das durch die Kandidatenidentifizierungseinheit (42) identifiziert wurde und innerhalb des vorbestimmten Entfernungsbereichs von der Projektionsoberfläche (100) vorliegt.

3. Projektorvorrichtung (1) nach Anspruch 1 oder 2, ferner eine Bewegungsermittlungseinheit umfassend, die dafür konfiguriert ist, auf der Grundlage der von mindestens einem der abbildenden Elemente (30a, 30b) fortlaufend ausgegebenen Bilder eine Bewegung der Eingabeeinheit zu ermitteln, worin
die Analyseeinheit (46) dafür konfiguriert ist, die Eingabeoperation auf der Grundlage der durch die Bewegungsermittlungseinheit ermittelten Bewegung zu analysieren.

4. Projektorvorrichtung (1) nach einem der Ansprüche 1 bis 3, worin die Stereokamera zwei Linsen (32a, 32b) umfasst, die dafür konfiguriert sind, Bilder des Abbildungsbereichs auf den jeweiligen abbildenden Elementen (30a, 30b) auszubilden, wobei die abbildenden Elemente (30a, 30b) auf einem Substrat (34) bereitgestellt und so ausgebildet sind, dass sie sich als eine Einheit mit den Linsen (32a, 32b) bewegen, welche so angeordnet sind, dass sie den jeweiligen abbildenden Elementen (30a, 30b) zugewandt sind.

5. Operationsermittlungsverfahren, das in einer Projektorvorrichtung durchgeführt wird, die eine Projektionseinheit (2), die dafür konfiguriert ist, ein Projektionsbild auf eine Projektionsoberfläche (100) zu projizieren, und eine Stereokamera (3), die dafür konfiguriert ist, ein Bild eines Abbildungsbereichs, der die Projektionsfläche (100) einschließt, durch zwei beabstandete abbildende Elemente (30a, 30b) aufzunehmen, aufweist, wobei das Verfahren umfasst:

Entfernungsinformation zu erfassen, die Entfernungen zwischen der Bildaufnahmeeinheit (3) und der Projektionsoberfläche und zwischen der Bildaufnahmeeinheit und einem Objekt angibt, das zwischen der Stereokamera und der Projektionsoberfläche eingeführt wird und im Abbildungsbereich vorliegt, und zwar auf der Grundlage einer Korrespondenzbeziehung zwischen zwei von den jeweiligen abbildenden Elementen (30a, 30b) ausgegebenen Bildern;
auf der Grundlage der Entfernungsinformation erfolgendes Ermitteln des Objekts als eine Eingabeeinheit, die eine Eingabeoperation in Bezug auf das Projektionsbild durchführt, wenn und nur wenn das Objekt nur innerhalb eines vorbestimmten Entfernungsbereichs von der Projektionsoberfläche (100) vorliegt, sodass es nahe der Projektionsoberfläche ist oder sie berührt; und
Analysieren der Eingabeoperation auf der Grundlage von mindestens einem von Folgendem: eine Position und eine Bewegung der Eingabeeinheit auf dem Projektionsbild, das auf die Projektionsoberfläche (100) projiziert wird.

**Revendications**

1. Dispositif projecteur (1) comprenant :

une unité de projection (2) configurée pour projeter une image de projection sur une surface de projection (100) ;
une caméra stéréo configurée pour capturer une image d'une région d'imagerie comprenant la surface de projection grâce à deux éléments d'imagerie (30a, 30b) espacés ;
une unité d'acquisition de distance (41) configurée pour acquérir des informations de distance indiquant des distances entre l'unité de capture d'image (3) et la surface de projection et entre l'unité de capture d'image et un objet imposé entre la caméra stéréo et la surface de projection et présent dans la région d'imagerie en se basant sur une relation de correspondance entre deux images produites à partir des éléments d'imagerie (30a, 30b) respectifs ;

une unité de détection d'unité d'entrée (43) configurée pour détecter, en se basant sur les informations de distance, l'objet en tant qu'unité d'entrée réalisant une opération d'entrée par rapport à l'image de projection lorsque et seulement lorsque l'objet est présent seulement dans une plage prédéterminée de distance par rapport à la surface de projection (100) de telle manière qu'il est proche de, ou touche, la surface de projection ; et

une unité d'analyse (46) configurée pour analyser l'opération d'entrée en se basant sur au moins un parmi une position et un mouvement de l'unité d'entrée sur l'image de projection projetée sur la surface de projection (100).

2. Dispositif projecteur (1) selon la revendication 1, comprenant en outre :

un dispositif de stockage (5) configuré pour stocker en son sein une valeur de caractéristique d'un objet destiné à être un candidat de l'unité d'entrée ; et

une unité d'identification de candidat (42) configurée pour identifier l'objet présent dans la région d'imagerie comme étant l'objet destiné à être le candidat de l'unité d'entrée en se basant sur l'image produite à partir d'au moins un des éléments d'imagerie (30a, 30b) et la valeur de caractéristique, dans lequel

l'unité de détection d'unité d'entrée (43) est configurée pour détecter, en tant qu'unité d'entrée, l'objet identifié par l'unité d'identification de candidat (42) et présent dans la plage prédéterminée de distance par rapport à la surface de projection (100).

3. Dispositif projecteur (1) selon la revendication 1 ou 2, comprenant en outre une unité de détection de mouvement configurée pour détecter un mouvement de l'unité d'entrée en se basant sur les images produites de manière séquentielle à partir d'au moins un des éléments d'imagerie (30a, 30b), dans lequel

l'unité d'analyse (46) est configurée pour analyser l'opération d'entrée en se basant sur le mouvement de l'unité d'entrée détecté par l'unité de détection de mouvement.

4. Dispositif projecteur (1) selon l'une quelconque des revendications 1 à 3, dans lequel la caméra stéréo comprend deux lentilles (32a, 32b) configurées pour former des images de la région d'imagerie sur les éléments d'imagerie (30a, 30b) respectifs, les éléments d'imagerie (30a, 30b) étant fournis sur un substrat (34) et formés de manière à bouger d'un seul tenant avec les lentilles (32a, 32b) qui sont positionnées pour faire face aux éléments d'imagerie (30a, 30b) respectifs.

5. Procédé de détection d'opération mis en oeuvre dans un dispositif projecteur qui comprend une unité de projection (2) configurée pour projeter une image de projection sur une surface de projection (100) et une caméra stéréo (3) configurée pour capturer une image d'une région d'imagerie comprenant la surface de projection (100) grâce à deux éléments d'imagerie (30a, 30b) espacés, le procédé comprenant les étapes consistant à :

acquérir des informations de distance indiquant des distances entre l'unité de capture d'image (3) et la surface de projection et entre l'unité de capture d'image et un objet imposé entre la caméra stéréo et la surface de projection et présent dans la région d'imagerie, en se basant sur une relation de correspondance entre deux images produites à partir des éléments d'imagerie (30a, 30b) respectifs ;

détecter, en se basant sur les informations de distance, l'objet en tant qu'unité d'entrée réalisant une opération d'entrée par rapport à l'image de projection lorsque et seulement lorsque l'objet est présent seulement dans une plage prédéterminée de distance par rapport à la surface de projection (100) de telle manière qu'il est proche de, ou touche, la surface de projection ; et

analyser l'opération d'entrée en se basant sur au moins un parmi une position et un mouvement de l'unité d'entrée sur l'image de projection projetée sur la surface de projection (100).

# FIG.1

# FIG.2

# FIG.3

IMAGING REGION OF
STEREO CAMERA

PROJECTION
IMAGES

3

1

2a

1a

# FIG.4A

32a

BASE LENGTH

32b

33

3

32

31

30a

30b

30a

34

35

Z

X

Y

# FIG.4B

30a

30b

30a1

30b1

34

# FIG.5

# FIG.6

# FIG.7

# FIG.8

# FIG.9

# FIG.10

# FIG.11

START

FORM DISTANCE IMAGE ——S101

CALCULATE DISTANCE TO SCREEN ——S102

IDENTIFY OBJECTS TO BE CANDIDATES OF INPUT UNIT ——S103

DETECT INPUT UNIT ——S104

DETECT POSITION OF INPUT UNIT ON PROJECTION IMAGE ——S105

NO / IS INPUT UNIT MOVING? ——S106

YES

DETECT MOVEMENT OF INPUT UNIT ——S107

ANALYZE INPUT OPERATION WITH RESPECT TO PROJECTION IMAGE ——S108

PERFORM PROCESS ACCORDING TO INPUT OPERATION ——S109

END

# FIG.12

# FIG.13

| (a) | (b) | (c) |
|---|---|---|
| RIGHT INCLINATION | NO INCLINATION | LEFT INCLINATION |

# FIG.14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3950837 B
- US 20090168027 A1
- JP 2003042733 A
- JP 2000122617 A